# EUROPEAN PATENT SPECIFICATION

(11) **EP 2 462 249 B1**
(45) Date of publication and mention of the grant of the patent: **18.03.2020**
(21) Application number: 10752196.5
(22) Date of filing: 03.08.2010
(51) Int. Cl.: C22B 3/08, C22B 23/00, C22B 3/44, C22B 3/00

(54) **PROCESS FOR THE RECOVERY OF METALS SUCH AS NICKEL FROM AN IRON-CONTAINING ORE BY LEACHING WITH ACIDIC SULFATE SOLUTION**
VERFAHREN ZUR GEWINNUNG VON METALLEN WIE NICKEL AUS EISENHALTIGEN ERZEN DURCH AUSLAUGUNG MIT SAURER SULFATLÖSUNG
PROCÉDÉ D'EXTRACTION DE MÉTAL TEL QUE LE NICKEL PAR LIXIVIATION DE MINERAIS FERRIFÈRES AVEC UNE SOLUTION SULFATIQUE ACIDE

(30) Priority: 03.08.2009 ZA 200905422
(43) Date of publication of application: 13.06.2012
(73) Proprietor: Anglo Operations Limited, Johannesburg 2001 (ZA)
(72) Inventor: SMIT, Jan Tjeerd, 2193 Johannesburg (ZA); STEYL, Johann du Toit, 2193 Johannesburg (ZA); PELSER, Max, 2188 Johannesburg (ZA)
(74) Representative: Boult Wade Tennant LLP
(86) International application number: PCT/IB2010/053518
(87) International publication number: WO 2011/015991

(56) References cited:
- WO-A1-96/41025
- WO-A1-2006/043158
- FR-A1- 2 390 505
- US-A- 2 584 700
- US-A- 4 511 540
- US-A- 5 571 308
- US-A- 5 874 055
- US-A1- 2004 200 730
- US-B2- 7 416 711
- ZHANG W ET AL: "Oxidation of Fe(II) in a synthetic nickel laterite leach liquor with SO2/air", MINERALS ENGINEERING, PERGAMON PRESS , OXFORD, GB LNKD- DOI:10.1016/J.MINENG.2009.09.013, vol. 23, no. 1, 1 January 2010 (2010-01-01), pages 40-44, XP026736302, ISSN: 0892-6875 [retrieved on 2009-10-17]

## Description

### BACKGROUND OF THE INVENTION

The invention relates to an acid treatment process which generates or regenerates sulfuric acid and optionally also hydrochloric acid while leaching a metal from an ore in a pure sulfate or mixed chloride/sulfate solution.

The use of relatively concentrated chloride/sulfate brines as a medium for the leaching of base metals from oxide and sulfide ores, and concentrates can be found in the open literature (see, for example, WO 2006/043154 and WO 2006/043158, the contents of which are incorporated herein by reference). These references also illustrate that high strength chloride brines allow generally faster and more complete leaching than the more common, relatively dilute, sulfate media. The ore is leached in the presence of hydrochloric acid so as to form a soluble metal-chloride salt in solution, while adding sulfuric acid and/or sulfur dioxide to the leach solution to lower the solubility of the resultant metal-sulfates in the leach solution and, thereby, simultaneously regenerating hydrochloric acid, *i.e., in situ* regeneration:

MgCl₂ + H₂SO₄ + H₂O → MgSO₄.H₂O_{(s)↓} + 2HCl (1)

and/or:

2FeCl₃ + MgCl₂ + SO₂ + 3H₂O → 2FeCl₂ + MgSO₄.H₂O_{(s)↓} + 4HCl (2)

The ore may be an oxidic base metal ore, such as a zinc oxide ore; a lateritic nickel ore, such as a saprolitic or limonitic ore; a pyritic sulfide ore or a titanium ore. The value metal is typically selected from the group consisting of Zn, Cu, Ti, Al, Cr, Ni, Co, Mn, Fe, Pb, Na, K, Ca, Ag, Au and platinum group metals. The metal in the metal-sulfate salt may be the value metal, or may be a metal of less value than the value metal, such as magnesium. These reactions (Reactions 1 and 2 above) reflect that magnesium is a major impurity in many low-grade ore-types, and precipitating it as a relatively dehydrated (a feature of high chloride solutions) sulfate salt in this manner allows a decoupling of the water balance from the high-energy sulfate decomposition step to recycle the sulfur dioxide and/or sulfuric acid:

MgSO₄•H₂O₍ₛ₎ → MgO₍ₛ₎ + SO_{2(g)} + ½O_{2(g)} + H₂O_{(g)} (3)

The process is therefore based upon the central idea of using energy to recycle all the reagents, i.e., a closed-loop approach (see also Steyl *et al.,* 2008). As illustrated in Steyl *et al.* (2008), optimal performance of this process relies on the co-treatment of limonitic and saprolitic ores (see WO 2006/043154 and WO 2006/043158 for a detailed review of the geology of lateritic ores), which makes use of the acid released during iron hydrolysis to leach nickel and cobalt from saprolitic ores. In this way, value extraction of the full laterite horizon is realised, at a minimised energy penalty. However, this requirement intrinsically fixes its application to niche-type ore deposits where the limonite ore (iron content) is approximately balanced by the equivalent amount of saprolite ore, *i.e*., the acid generating capacity of the high-iron limonite ore is balanced by the acid neutralising capacity of the high-magnesium saprolite ore. This process (hereafter referred to as the "ARNi process" (Anglo Research Nickel), Steyl et al. (2008)) is therefore, to a large extent, a saprolite-treating process because the major operating cost benefit is achieved by extracting nickel associated with the saprolite ore, while hydrolysing iron that was leached from the primary ore. The circuit is configured to minimise the total energy pull and evolves, primarily, around magnesium handling. The recovery of a high quality iron oxide as an optional afterthought to magnesium management is greatly complicated by opex considerations which are "hard wired" into existing flowsheets. Therefore, drawbacks of the ARNi process are:
1) The ARNi circuit is not geared towards treating excess limonite ore. This is an important issue because the bulk of the world land-based nickel laterite resource is contained in high-iron limonitic-type ores and to a far lesser degree, by saprolite-type ores (*e.g*., WO 2006/043154 and WO 2006/043158);
2) The process relies on the high temperature (typically 900 to 1200°C) thermal decomposition of magnesium sulfate monohydrate (kieserite), which requires considerable amounts of energy, despite having such a low hydration state. The cost of energy is rapidly increasing and will become prohibitive to the drive of most companies to reflect a limited carbon footprint; and
3) The recovery of dissolved values of low concentration from large brine solution flows is generally cumbersome.

Hence, there is a need to develop a process that can replace the acid content in the primary process by exploiting the properties of alternative chemical systems rather than to exclusively rely on the brute force of energy. Furthermore, a process that can separate a dry hematite product, while reducing acid plant capacity, would obviously reflect superior operating and capital costs *cf*. a process that cannot realise any value from the bulk gangue metal, while paying a high energy penalty to essentially produce a solid "waste" stream. Finally, it has to be realised that due to irregularity of the weathering profile (in depth) of the laterite horizon and also due to non-uniform mining, a specific ore sample, e.g. limonite, may contain variable proportions of other ores, e.g. saprolite. The resulting ore feed is thus characterized by highly variable mineralogy and associated processing characteristics. FR2390505, WO9641025 and US2584700 disclose leaching processes of iron-containing ores.

The applicant has therefore identified a need for a more efficient and economical leaching process for the recovery of value metals from ores that contain major excess of iron associated with the bulk mineralogy. In particular, the applicant has identified a need for a method of maintaining acid strength in a primary leach circuit, without major energy or make-up reagent requirements.

### SUMMARY OF THE INVENTION

According to the invention, which is defined in claim 1 , there is provided a process for leaching a value metal from an iron-containing ore, the process including the steps of:
leaching the ore in an acidic sulfate solution so as to form an iron-sulfate salt in a leach solution; wherein the leach solution contains iron in the ferritic state;
adding sulfur dioxide to the leach solution during and/or after the leaching to regenerate acid; and
recovering the iron-sulfate salt from the leach solution,
wherein the value metal is Zn, Cu, Ti, Al, Cr, Ni, Co, Mn, Fe, Pb, Na, K, Ca, Ag, Au or a platinum group metal.

The leach solution contains iron in the ferric state. Alternatively, if the leach solution contains iron in the ferrous state, an oxidant may be added prior to the addition of sulfur dioxide to convert the ferrous to ferric. The recovered iron-sulfate salt may have the formula FeSO₄.xH₂0, where x is 0 or greater, such as 0, 1, 2, 3, 4, 5, 6 or 7.
The source of the iron in the iron-sulfate salt may be predominantly from the ore.

The iron in the iron-sulfate salt may be the value metal. Alternatively, the value metal may be a metal other than iron.
The iron-sulfate salt formed during leaching may be a soluble salt.

The leaching solution may also include chlorides, and iron chloride salts may be formed in addition to the iron sulfate salts. The iron chloride salts may be recovered from the iron sulfate salts.
The ore may be a lateritic nickel ore, such as a limonitic or saprolitic ore. The ore may be an essentially oxidic or silicaceous base metal ore. For example, the ore may be a copper oxide ore. The ore may be a sulfide, titanium or aluminium ore.

The process may be conducted in an essentially pure sulfate medium, or may be conducted in a mixed sulfate/chloride medium.

One or more value metals, such as cobalt and for nickel, may be recovered with the iron sulfate salts and may be subsequently separated from the iron sulfate salts.

The recovered iron sulfate salts may be decomposed to iron oxides without decomposing the sulfate salts of the other metals, those other metals being recovered by posttreatment of the iron oxide calcine. Alternatively, the recovered iron sulfate salts may be decomposed to iron oxides whilst also decomposing the sulfate salts of the other metals, those other metals being recovered by posttreatment of the iron oxide calcine.

The iron-sulfate salt may be recovered out of the leach solution by exceeding its solubility.

The iron-sulfate salt may be treated so as to release sulfur dioxide and/or sulfur trioxide.

The value metal may be recovered independently of the iron salt formed by the addition of the sulfur dioxide.

The regenerated acid may be recycled within the leach process.

The iron-sulfate salt may be used to produce iron oxide.

The value metal may be leached from the ore at a temperature from about room temperature to about the boiling point of the leach solution.

### BRIEF DESCRIPTION OF THE DRAWINGS

- Figure 1:: shows typical results for a test in which sulfur dioxide is absorbed in a pure sulfate medium.
- Figure 2:: shows typical results for a test in which sulfur dioxide is absorbed in a mixed chloride/sulfate medium.
- Figure 3:: shows an example of a conceptual flowsheet for the recovery of iron from a limonite ore by decomposition of an iron sulfate product, after reduction with sulfur dioxide in a pure sulfate system.
- Figure 4:: shows an example of a conceptual flowsheet for the recovery of iron from a limonite ore by decomposition of a nickel-rich iron sulfate precipitate (after ferric reduction by sulfur dioxide).
- Figure 5:: shows an example of a conceptual flowsheet for the recovery of iron from a limonite ore by decomposition of a relatively pure iron sulfate precipitate (after ferric reduction by sulfur dioxide) and bleed-stream recovery of nickel.

### DETAILED DESCRIPTION OF THE INVENTION

The process of the invention is defined in claim 1 . The process of the invention introduces a new generic approach in optimising reagent and energy usage. The primary reagent, i.e. H⁺, is regenerated without the need for excessive neutralisation of post-leach liquors or the need for excessive make-up of fresh reagents. This approach can be applied to both a pure sulfate system and a mixed chloride/sulfate system.

According to the invention, a process is described for the leaching of one or more value metals from an iron-containing ore in a solution containing sulfuric acid, and optionally also hydrochloric acid, from which the iron is recovered as a solid iron sulfate and a major portion of the acid in the solution is restored.

The value metal is leached from a metal-bearing material, which may be either a sulfide or non-sulfide material. For example, the material may be a lateritic nickel ore, such as a limonitic ore; an oxidic base metal ore, such as a copper-iron oxide ore; a sulfide ore; an aluminium ore or a titanium ore. Iron from the ore first forms a soluble metal sulfate (and optionally also a metal chloride), prior to formation of the solid sulfate (and optionally also solid chloride).

The value metal(s) is typically selected from the group consisting of Zn, Cu, Ti, Al, Cr, Ni, Co, Mn, Fe, Pb, Na, K, Ca, Ag, Au and platinum group metals.

Sulfur dioxide is added to the solution containing the leached metal(s) so as to regenerate acid. The iron sulfate salt may be subsequently recovered as a solid sulfate salt.

The iron sulfate salt typically has the formula FeSO₄.xH2O, where x is 0 or greater, such as 0, 1, 2, 3, 4, 5, 6 or 7.

Iron sulfate and iron chloride concentrations are typically selected to:
positively affect the leach process;
allow easy precipitation of the corresponding sulfate; and/or
affect the hydration state of the precipitated sulfate salt, either to produce a lower hydration state to benefit the energy required for thermal decomposition or to produce a higher hydration state to allow co-precipitation of different metal sulfate salts, from where a value metal of low concentration may be recovered.

The initial concentration of the acid is selected so as to leach a high proportion of the value metal while also fulfilling acid consumption demands from the ore. It was found that a final leach pH of 0.5 or lower resulted in value metal extractions of over 80%. However, this is ore-specific, and it will be understood by a person skilled in the art that satisfactory leaching may be achieved at higher final pH values on other materials than those tested herein. Sulfur dioxide and sulfuric acid is generally added to the solution in a sufficient quantity so as to maintain the acid requirement of the leaching step. These reagents, in turn, are preferably generated by the thermal decomposition of the iron sulfate salt and thus allow for a closed-loop approach with regards to the primary reagent, i.e., H⁺.

The process consists of a precipitation or crystalisation step to produce iron-sulfate crystals by explicitly adding a source of sulfur, such as sulfur dioxide and/or sulfuric acid. As an alternative, evaporative crystallisation (within, or even slightly exceeding normal water balance requirements) or cooling crystalisation may be utilised to alleviate the load of the above-mentioned chemical precipitation reaction. This alternative is made possible due to the superimposed effect of the background concentration on the degree of salt precipitation upon water removal by evaporation.

Furthermore, co-precipitation of a value metal, e.g. nickel or cobalt, within the crystal structure of the bulk metal associated with the mineral gangue, e.g. ferrous sulfate salt, is typically most prevalent when performing precipitation at lower temperatures. This tendency for co-precipitation essentially diminishes when conducting precipitation close to the atmospheric boiling point of the solution. This temperature behaviour may be exploited to achieve the economically most viable process route in order to regenerate the acidic proton, while either co-recovering the gangue and value metals or producing separate product streams. These salts can be sold directly, can be subjected to thermal decomposition to produce a metal oxide, which can be sold, and sulfur dioxide, and/or can be re-dissolved in a sulfate medium and thereafter recovered in a conventional hydrometallurgical circuit.

One or more value metals, such as nickel, cobalt, and/or copper, can also be selectively separated from the solution prior to the formation of the iron sulfate salt. Alternatively, a bleed stream may be introduced to recover a proportion of the value metal, after which the resulting solution may be recycled back to the primary circuit.

Other residual impurities resulting from the solubilisation of the ore can also be partially removed from the leach solution by, for example, solvent extraction followed by pyrohydrolysis, or hydrolysis.

The iron in the iron-sulfate salt can be the value metal, in which case the process typically includes a step of decomposing the iron-sulfate salt to recover the iron.

Alternatively, the iron in the iron-sulfate salt can be a metal of less value than the value metal, and the value metal may be recovered independently of the iron salt formed by the addition of sulfur dioxide and/or sulfuric acid.

The iron-sulfate salt can be treated so as to release sulfur dioxide.

The process is not necessarily limited by temperature ranges, provided that the solubility of the iron sulfate is significantly less than the corresponding chloride. Nevertheless, leaching is generally performed at a temperature between room temperature and the boiling point of the solution, and the sulfate precipitation step is generally carried out at a temperature where the referred to solubility differences are maximum.

Particular aspects of the process are:
acid strength is maintained in a base metal sulfate or base metal sulfate brine;
the leach process, working in a sulfate or mixed sulfate/chloride medium, is maintained by addition of sulfur dioxide gas and sulfuric acid;
a metal, such as ferrous, is recovered as an only moderately hydrated salt, which can be thermally decomposed, re-dissolved in sulfate medium and treated in a conventional hydrometallurgical circuit, or sold directly, as the sulfate.

The invention will now be described in more detail by way of the following non-limiting examples. Such examples, however, are not to be construed as limiting in any way either the spirit or scope of the invention.

### Examples:

### 1. Absorption of sulfur dioxide in a ferric solution

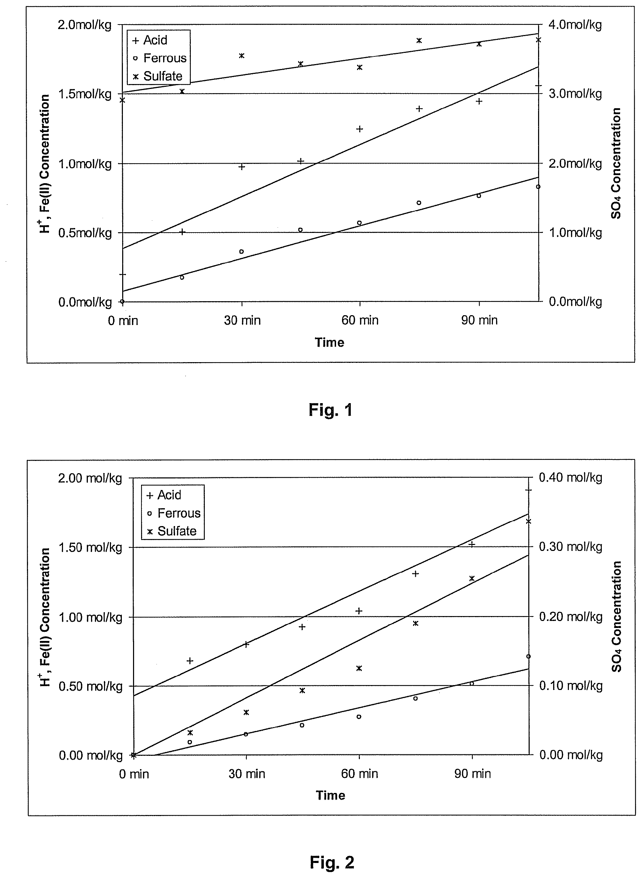

Synthetic solutions containing 2.0 mol/kg ferric as either a chloride or a sulfate and 0.5 mol/kg acid were prepared in a 2l jacketed reactor. During a test the solution was heated to and maintained constant at 95°C by circulating heating fluid through the reactor jacket. Sulfur dioxide was bubbled into the reactor at a constant rate of 200 Nml/min using a massflow controller. Solution samples (50 ml) were taken from the reactor at set time intervals. The samples were analysed for sulfate, ferrous and acid. Typical results obtained are shown in Figure 1 for a sulfate system and Figure 2 for a mixed chloride/sulfate system.

In both systems the acid, ferrous and sulfate concentrations increased at a mol ratio close to 4:2:1 (H⁺:Fe(II):SO₄). Acid concentrations of greater than 1 mol/kg could be generated in both systems which are suitable for leaching of most minerals.

### 2. Direct usage of sulfur dioxide to regenerate acid and recover iron

The following strategy describes how sulfur dioxide may be directly used to regenerate acid in a pure sulfate or mixed chloride/sulfate system, using the resulting solution to leach valuable metals from limonite ores.

Iron in the ferric (3+) state is required to act as carrier/sorbent for the sulfur dioxide gas during the acid regeneration step. The bulk of the iron may enter the solution in the ferric state during the leaching of the ore, as is the case for example when leaching oxide ores such as high-iron limonite. However, if the bulk of the iron enters the solution in the ferrous (2+) state, an oxidant (such as oxygen) would be required to first (or simultaneously re-) oxidise the ferrous iron to its ferric state.

2Fe²⁺ + 2H⁺ + ½O₂ → 2Fe³⁺ + H₂O (4)

The acid regeneration step then follows, where the absorption of sulfur dioxide is accompanied by a release of sulfuric acid into solution:

2Fe³⁺ + SO_{2(g)} + 2H₂O → 2Fe²⁺ + H₂SO₄ + 2H⁺ (5)

In the pure sulfate system ferrous sulfate can be forced to exceed its own solubility by removing the solvent (e.g. water evaporation) or by exploiting its temperature dependency (e.g. cooling crystallisation). Forcing ferrous sulfate to exceed its solubility results in a solid phase to be produced which can be recovered from the solution. In the mixed chloride/sulfate system, the difference in salt solubility between the major metal chloride and sulfate species is exploited to regenerate the hydrochloric acid equivalent, consumed during leaching. In the case of iron leached from limonitic oxide ores and if the pulp density in the leach is maintained at high enough levels, the overall reaction may be expressed as follows:

2Fe³⁺ + H₂SO₄ + SO_{2(g)} + 4H₂O → 2FeSO₄.xH₂O_{(s)↓} + 6H⁺ (6)

In order to drive this reaction to the required extent, 'in-situ' neutralisation may be required by recycling magnesia within the circuit. Alternatively for the mixed chloride/sulfate system, hydrochloric acid may be volatilised in order to maintain the free acid concentration at an acceptable level inside the reactor to drive the precipitation reaction. The volatilised hydrochloric acid/water stream may then have to be distilled and returned to the atmospheric leaching step. If the iron to magnesium ratio in the solution is high enough, the precipitation of magnesium sulfate (kieserite) according to the standard ARNi process would be insignificant and relatively pure iron sulfate crystals would be formed. It can thus be seen that Reaction 6 generates two protons for every mol iron leached, while three protons are consumed for every iron leached in the atmospheric leaching reaction:

2FeOOH + 6H⁺ → 2Fe³⁺ + 4H₂O (7)

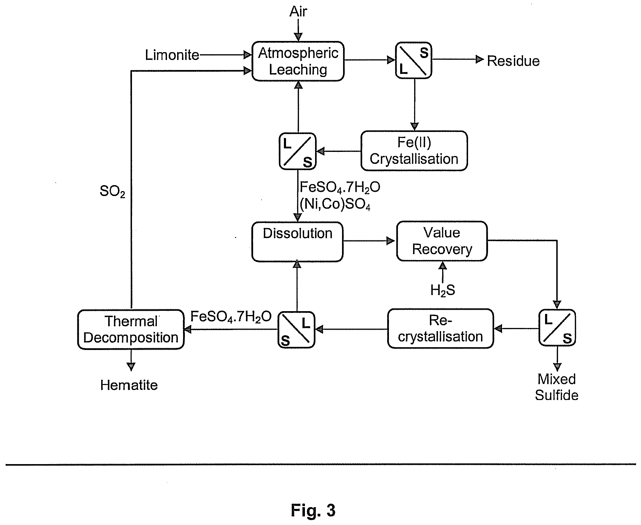

Therefore, another third of the total proton requirement has to be supplied as acid or alternatively, an equivalent internal oxidation/reduction cycle (Reactions 4 and 5) has to be established, in order to maintain the acid balance in the circuit. For every mol of acid-consuming impurities, other than iron, the acid has to be supplied externally. However, the ARNi concept around magnesium (i.e., the major impurity besides iron) can be integrated within this circuit in an efficient manner. The precipitated salt (MgSO₄.H₂O) may then be thermally decomposed to regenerate the equivalent amount of sulfur dioxide gas, thus making the whole process completely self sustainable. Alternatively, elemental sulfur (or another cheap sulfur source) may be burnt in air to produce sulfur dioxide gas that can be converted to sulfuric acid in an acid plant. Figures 3 to 5 present different schemes of the invention, i.e., producing an iron sulfate salt by reducing ferric with sulfur dioxide and regenerating protons at the same time.

### 3. Conceptual flowsheet for the recovery of iron from a limonite ore by decomposition of an iron sulfate product, after reduction with sulfur dioxide in the pure sulfate system.

This example is illustrated in Figure 3. The limonite ore is subjected to a sulfate acid leaching process to solubilise most of the valuable nickel and cobalt. A large proportion of the gangue iron would simultaneously solubilise to form ferric sulfate (Fe₂(SO₄)₃) in solution. The acid concentration in the leach is maintained by adding sulfur dioxide to the solution. The ferric ion in solution is reduced with sulfur dioxide to the ferrous state (Reaction 5) and this regenerates two-thirds of the equivalent sulfuric acid consumed during the leaching of the iron (Reaction 7). The remaining acid demand is fulfilled by oxidising ferrous ion in solution using an oxidant such as air. This will allow additional sulfur dioxide to be absorbed according to reaction 5. After removal of the remaining residue, consisting predominantly of silica, the solution conditions are manipulated to exceed the solubility of ferrous sulfate (e.g. cooling crystallisation). The conditions in the iron reduction step are controlled (via temperature and reactor design) to allow co-precipitation of some of the leached nickel to yield a nickel to iron ratio in the precipitate that is at least equal to, but preferably substantially higher than in the initial limonite ore. The ferrous sulfate salt is filtered and the solution is recycled to the leaching step. The ferrous sulfate salt is redissolved in an essentially neutral solution from which the valuable metals are subsequently recovered using know techniques such as mixed sulfide precipitation. The purified ferrous sulfate solution is recrystallised by cooling (cooling crystallisation). This product is then subjected to thermal decomposition at a relatively low temperature (<500°C) to form hematite (Fe₂O₃). The water balance is maintained by the evaporation during decomposition.

### 4. Conceptual flowsheet for the recovery of iron from a limonite ore by decomposition of a nickel-rich iron sulfate product, after reduction with sulfur dioxide.

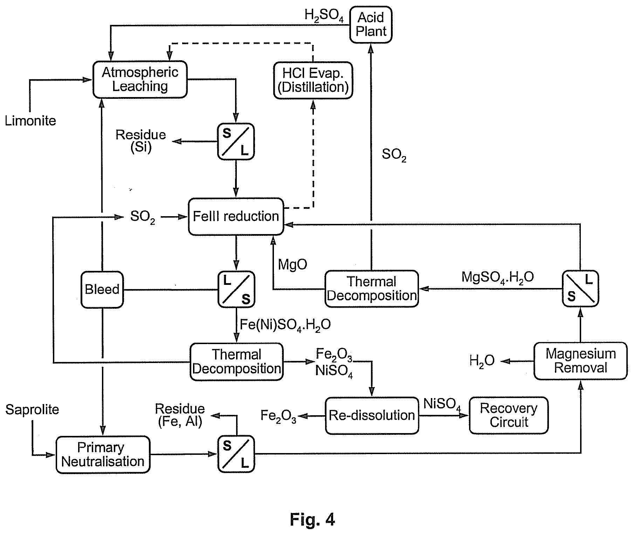

This example is illustrated in Figure 4. The limonite ore is subjected to a mixed chloride-sulfate acid leaching process to solubilise most of the valuable nickel and cobalt. A large proportion of the gangue iron would simultaneously solubilise to form ferric chloride (FeCl₃) in solution. After removal of the remaining residue, consisting predominantly of silica, the solution is reduced with sulfur dioxide to the ferrous form in order to precipitate a ferrous sulfate salt (Reaction 6) and regenerate two-thirds of the equivalent hydrochloric acid consumed during the leaching of the iron (Reaction 7). The ferrous sulfate salt is filtered and the partially regenerated acid solution is recycled to the leaching step. The conditions in the iron reduction step are controlled (via temperature and chloride concentration manipulation) to allow co-precipitation of some of the leached nickel to yield a nickel to iron ratio in the precipitate that is at least equal to, but preferably substantially higher than in the initial limonite ore. This precipitate is then subjected to thermal decomposition at relatively low temperature (e.g.<500°C) to form hematite (Fe₂O₃) and dehydrated nickel sulfate salt in the solid phase, and sulfur dioxide in the gas phase, which is recycled to the reduction step. The nickel salt is redissolved under approximately neutral solution conditions, while a relatively pure hematite product is filtered off. The nickel solution may then be subjected to conventional hydrometallurgical treatment to recover the final product in any desired form, i.e., nickel and cobalt metal, mixed hydroxide, sulfide, etc. A bleed stream from the primary circuit is used to control the impurity levels (besides iron) in the circuit. The free acid and acid locked up with iron is neutralised with an oxide, e.g., saprolite and the equivalent mole value replaced with magnesium. This magnesium is then removed from solution as kieserite by means of evaporative crystallisation, after which the solution is recycled to the main circuit, e.g., the reduction step. The kieserite is thermally decomposed to form sulfur dioxide and magnesia (MgO), which is recycled internally to satisfy neutralisation requirements. The sulfur dioxide is converted to sulfuric acid and recycled to the atmospheric leaching step to restore the acid balance in the circuit. The water balance is maintained by the evaporation step.

### 5. Conceptual flowsheet for the recovery of iron from a limonite ore by decomposition of a relatively pure iron sulfate product, after reduction with sulfur dioxide.

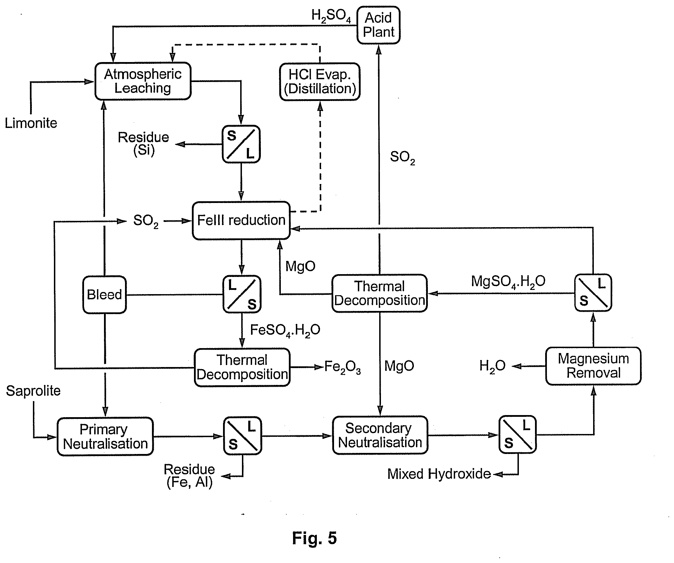

This example is illustrated in Figure 5. The limonite ore is subjected to a mixed chloride-sulfate acid leaching process to solubilise most of the valuable nickel and cobalt. A large proportion of the gangue iron would simultaneously solubilise to form ferric chloride (FeCl₃) in solution. After removal of the remaining residue, consisting predominantly of silica, the solution is reduced with sulfur dioxide to the ferrous form in order to precipitate a ferrous sulfate salt (Reaction 6) and regenerate two-thirds of the equivalent hydrochloric acid consumed during the leaching of the iron (Reaction 7). The ferrous sulfate salt is filtered and the partially regenerated acid solution is recycled to the leaching step. The conditions in the iron reduction step are controlled (via temperature and chloride concentration manipulation) to prevent co-precipitation of leached nickel and to yield a relatively pure ferrous sulfate salt. This precipitate is then subjected to thermal decomposition at relatively low temperature (e.g. <500°C) to form hematite (Fe₂O₂) and sulfur dioxide in the gas phase, which is recycled to the reduction or any other step in the primary cycle. A bleed stream from the primary circuit is used to control the impurity levels (besides iron) in the circuit. The free acid and acid locked up with iron is neutralised with an oxide, e.g., saprolite and the equivalent mole value replaced with magnesium. Once most of the iron has been hydrolysed and removed from the bleed solution, nickel and cobalt are removed (e.g., mixed hydroxide precipitation with magnesia or sulfide precipitation with hydrogen sulfide). The resulting solution is then concentrated up by water evaporation and the excess magnesium is removed from solution as kieserite, after which the solution is recycled to the main circuit, e.g., the reduction step. The kieserite is thermally decomposed to form sulfur dioxide and magnesia (MgO), which is recycled internally to satisfy neutralisation requirements. The sulfur dioxide is converted to sulfuric acid and recycled to the atmospheric leaching step to restore the acid balance in the circuit. The water balance is maintained by the evaporation step. An alternative approach may be to dump the bleed solution after value metal (nickel and cobalt) removal. This would eliminate any evaporation requirement but the equivalent moles of sulfate would have to be replaced with make-up sulfuric acid, while make-up reagents would be required for value-metal removal (no internal recycle of magnesia).

The process provides an economically and environmentally acceptable hydrometallurgical process route for the recovery of value metals from ores or concentrates that contain appreciable amounts of labile iron that would dissolve under acidic leaching conditions.

### References

Steyl, J.D.T., Pelser, M. and Smit, J.T. (2008) Atmospheric leach process for nickel laterite ores, In: C.A. Young, P.R. Taylor, C.G. Anderson and Y. Choi (eds.), Hydrometallurgy 2008, Proceedings of the Sixth International Symposium, Phoenix, AZ, SME., Littleton, CO., pp.561-569.

## Claims

1. A process for leaching a value metal from an iron-containing ore, the process including the steps of:
leaching the ore in an acidic sulfate solution so as to form an iron-sulfate salt in a leach solution, wherein the leach solution contains iron in the ferric state;
adding sulfur dioxide to the leach solution during and/or after the leaching to regenerate acid; and
recovering the iron-sulfate salt from the leach solution,
wherein the value metal is Zn, Cu, Ti, Al, Cr, Ni, Co, Mn, Fe, Pb, Na, K, Ca, Ag, Au or a platinum group metal.

2. A process according to claim 1, further includes adding an oxidant to convert ferrous iron produced in the process to a ferric state and the ferric state is used in the step to regenerate acid.

3. A process according to any one of claims 1 to 2, wherein the recovered iron-sulfate salt has the formula FeSO₄.xH2O, where x is 0 or greater, and preferably wherein x is 0, 1, 2, 3, 4, 5, 6 or 7.

4. A process according to any one of claims 1 to 3, wherein the iron in the iron- sulfate salt is the value metal, and/or wherein the iron-sulphate is used to produce iron oxide, and/or wherein the source of the iron in the iron-sulfate salt is predominantly from the ore.

5. A process according to any one of claims 1 to 4, wherein the value metal is not iron.

6. A process according to any one of claims 1 to 5, wherein the iron-sulfate salt formed during leaching is a soluble salt.

7. A process according to any one of claims 1 to 6, wherein the leaching solution also includes chlorides and iron chloride salts are formed in addition to the iron sulfate salts, preferably wherein the iron chloride salts are recovered with the iron sulfate salts.

8. A process according to any one of claims 1 to 7, wherein the ore is a lateritic nickel ore, preferably a limonitic or saprolitic ore.

9. A process according to any one of claims 1 to 8, wherein the ore is an essentially oxidic or silicaceous base metal ore, preferably a copper oxide ore, or wherein the ore is a sulphide, titanium or aluminium ore.

10. A process according to any one of claims 1 to 9, which is conducted in an essentially pure sulfate medium or in a mixed sulfate/chloride medium.

11. A process according to any one of claims 1 to 10, wherein one or more value metals are recovered with the iron sulfate salts and are subsequently separated from the iron sulfate salts, preferably wherein the value metal recovered with the iron sulfate salts is nickel and/or cobalt.

12. A process according to claim 11, wherein the recovered iron sulfate salts are decomposed to iron oxides without decomposing the sulfate salts of the other metals, those other metals being recovered by post-treatment of the iron oxide calcine, or wherein the recovered iron sulfate salts are decomposed to iron oxides whilst also decomposing the sulfate salts of the other metals, those other metals being recovered by post-treatment of the iron oxide calcine.

13. A process according to any one of claims 1 to 12, wherein the iron-sulfate salt is:
(i) recovered out of the leach solution by exceeding its solubility; and/or
(ii) treated so as to release sulfur dioxide and/or sulfur trioxide.

14. A process according to any one of claims 1 to 13, wherein the value metal is:
(i) recovered independently of the iron salt formed by the addition of the sulfur dioxide; and/or
(ii) leached from the ore at a temperature from about room temperature to about the boiling point of the leach solution.

15. A process according to any one of claims 1 to 14, wherein the regenerated acid is recycled within the leach process.

## Patentansprüche

1. Verfahren zum Auslaugen eines Wertmetalls aus einem eisenhaltigen Erz, wobei das Verfahren die Schritte einschließt:
Auslaugen des Erzes in einer sauren Sulfatlösung, um ein Eisen-Sulfatsalz in einer Auslaugungslösung zu bilden, wobei die Auslaugungslösung Eisen im Eisen (III)-Zustand enthält;
Zugabe von Schwefeldioxid zu der Auslaugungslösung während und/oder nach dem Auslaugen, um Säure zu regenerieren; und
Rückgewinnen des Eisen-Sulfatsalzes aus der Auslaugungslösung,
wobei das Wertmetall Zn, Cu, Ti, AI, Cr, Ni, Co, Mn, Fe, Pb, Na, K, Ca, Ag, Au oder ein Platinmetall ist.

2. Verfahren nach Anspruch 1, das weiterhin einschließt Zugabe eines Oxidationsmittels, um zweiwertiges Eisen, das im Verfahren zu einem Eisen (III)-Zustand hergestellt wird, umzuwandeln, und wobei der Eisen (III)-Zustand im Schritt Rückgewinnen von Säure verwendet wird.

3. Verfahren nach einem der Ansprüche 1 bis 2, wobei das rückgewonnene Eisen-Sulfatsalz die Formel FeSO₄-xH₂O aufweist, wobei x 0 oder größer ist und bevorzugt, wobei x 0, 1, 2, 3, 4, 5, 6 oder 7 ist.

4. Verfahren nach einem der Ansprüche 1 bis 3, wobei das Eisen in dem Eisen-Sulfatsalz das Wertmetall ist und/oder wobei das Eisen-Sulfat verwendet wird, um Eisenoxid herzustellen und/oder wobei die Eisenquelle in dem Eisen-Sulfatsalz überwiegend aus dem Erz stammt.

5. Verfahren nach einem der Ansprüche 1 bis 4, wobei das Wertmetall nicht Eisen ist.

6. Verfahren nach einem der Ansprüche 1 bis 5, wobei das Eisen-Sulfatsalz, das während des Auslaugens gebildet wird, ein lösliches Salz ist.

7. Verfahren nach einem der Ansprüche 1 bis 6, wobei die Auslaugungslösung auch Chloride einschließt und Eisenchloridsalze zusätzlich zu den Eisen-Sulfatsalzen gebildet werden, bevorzugt wobei die Eisenchloridsalze mit den Eisen-Sulfatsalzen zurückgewonnen werden.

8. Verfahren nach einem der Ansprüche 1 bis 7, wobei das Erz ein lateritisches Nickelerz ist, bevorzugt ein limonitisches oder saprolitisches Erz.

9. Verfahren nach einem der Ansprüche 1 bis 8, wobei das Erz ein im wesentlichen oxidisches oder kieselsäurehaltiges Grundmetallerz ist, bevorzugt ein Kupferoxiderz, oder wobei das Erz ein Sulfid-, Titan- oder Aluminiumerz ist.

10. Verfahren nach einem der Ansprüche 1 bis 9, das in einem im wesentlichen reinen Sulfatmedium oder in einem gemischten Sulfat/Chlorid-Medium durchgeführt wird.

11. Verfahren nach einem der Ansprüche 1 bis 10, wobei ein oder mehrere Wertmetalle mit den Eisen-Sulfatsalzen zurückgewonnen werden und anschließend von den Eisen-Sulfatsalzen getrennt werden, bevorzugt wobei das Wertmetall, das mit den Eisen-Sulfatsalzen zurückgewonnen wird, Nickel und/oder Kobalt ist.

12. Verfahren nach Anspruch 11, wobei die zurückgewonnenen Eisen-Sulfatsalze zu Eisenoxiden zerlegt werden, ohne die Sulfatsalze der anderen Metalle zu zerlegt, wobei diese anderen Metalle durch Nachbehandlung des kalzinierten Eisenoxids zurückgewonnen werden oder wobei die zurückgewonnenen Eisen-Sulfatsalze zu Eisenoxiden zerlegt werden, während auch die Sulfatsalze der anderen Metalle zerlegt werden, wobei diese anderen Metalle durch Nachbehandlung des kalzinierten Eisenoxids zurückgewonnen werden.

13. Verfahren nach einem der Ansprüche 1 bis 12, wobei das Eisen-Sulfatsalz:
(i) aus der Auslaugungslösung durch Überschreiten seiner Löslichkeit zurückgewonnen wird und/oder
(ii) behandelt wird, um Schwefeldioxid und/oder Schwefeltrioxid freizusetzen.

14. Verfahren nach einem der Ansprüche 1 bis 13, wobei das Wertmetall:
(i) unabhängig von dem Eisensalz, das durch die Zugabe des Schwefeldioxids gebildet wird, zurückgewonnen wird und/oder
(ii) aus dem Erz bei einer Temperatur von etwa Raumtemperatur bis etwa zum Siedepunkt der Auslaugungslösung ausgelaugt wird.

15. Verfahren nach einem der Ansprüche 1 bis 14, wobei die regenerierte Säure innerhalb des Auslaugungsverfahrens zurückgeführt wird.

## Revendications

1. Procédé de lixiviation d'un métal de valeur à partir d'un minerai contenant du fer, le procédé comportant les étapes consistant à :
lixivier le minerai dans une solution de sulfate acide de manière à former un sel de sulfate de fer dans une solution de lixiviation, où la solution de lixiviation contient du fer à l'état ferrique ;
ajouter du dioxyde de soufre à la solution de lixiviation pendant et/ou après la lixiviation pour régénérer l'acide ; et
récupérer le sel de sulfate de fer de la solution de lixiviation,
dans lequel le métal de valeur est Zn, Cu, Ti, Al, Cr, Ni, Co, Mn, Fe, Pb, Na, K, Ca, Ag, Au ou un métal du groupe du platine.

2. Procédé selon la revendication 1, comporte en outre l'étape consistant à ajouter un oxydant pour convertir le fer ferreux produit dans le procédé en un état ferrique et l'état ferrique est utilisé dans l'étape de régénération d'acide.

3. Procédé selon l'une quelconque des revendications 1 et 2, dans lequel le sel de sulfate de fer récupéré a la formule FeSO₄.xH2O, où x est supérieur ou égal à 0, et où de préférence x vaut 0, 1, 2, 3, 4, 5, 6 ou 7.

4. Procédé selon l'une quelconque des revendications 1 à 3, dans lequel le fer dans le sel de sulfate de fer est le métal de valeur, et/ou dans lequel le sulfate de fer est utilisé pour produire de l'oxyde de fer, et/ou dans lequel la source du fer dans le sel de sulfate de fer provient principalement du minerai.

5. Procédé selon l'une quelconque des revendications 1 à 4, dans lequel le métal de valeur n'est pas le fer.

6. Procédé selon l'une quelconque des revendications 1 à 5, dans lequel le sel de sulfate de fer formé pendant la lixiviation est un sel soluble.

7. Procédé selon l'une quelconque des revendications 1 à 6, dans lequel la solution de lixiviation comporte également des chlorures et des sels de chlorure de fer sont formés en plus des sels de sulfate de fer, de préférence dans lequel les sels de chlorure de fer sont récupérés avec les sels de sulfate de fer.

8. Procédé selon l'une quelconque des revendications 1 à 7, dans lequel le minerai est un minerai de nickel latéritique, de préférence un minerai limonitique ou saprolitique.

9. Procédé selon l'une quelconque des revendications 1 à 8, dans lequel le minerai est un minerai de métal de base essentiellement oxydique ou siliceux, de préférence un minerai d'oxyde de cuivre, ou dans lequel le minerai est un minerai de sulfure, de titane ou d'aluminium.

10. Procédé selon l'une quelconque des revendications 1 à 9, qui est conduit dans un milieu sulfate essentiellement pur ou dans un milieu sulfate/chlorure mixte.

11. Procédé selon l'une quelconque des revendications 1 à 10, dans lequel un ou plusieurs métaux de valeur sont récupérés avec les sels de sulfate de fer et sont ensuite séparés des sels de sulfate de fer, de préférence dans lequel le métal de valeur récupéré avec les sels de sulfate de fer est le nickel et/ou le cobalt.

12. Procédé selon la revendication 11, dans lequel les sels de sulfate de fer récupérés sont décomposés en oxydes de fer sans décomposer les sels de sulfate des autres métaux, ces autres métaux étant récupérés par post-traitement du calcinat d'oxyde de fer, ou dans lequel les sels de sulfate de fer récupérés sont décomposés en oxydes de fer tout en décomposant également les sels de sulfate des autres métaux, ces autres métaux étant récupérés par post-traitement du calcinat d'oxyde de fer.

13. Procédé selon l'une quelconque des revendications 1 à 12, dans lequel le sel de sulfate de fer est :
(i) récupéré de la solution de lixiviation en dépassant sa solubilité ; et/ou
(ii) traité de manière à libérer du dioxyde de soufre et/ou du trioxyde de soufre.

14. Procédé selon l'une quelconque des revendications 1 à 13, dans lequel le métal de valeur est :
(i) récupéré indépendamment du sel de fer formé par l'ajout du dioxyde de soufre ; et/ou
(ii) lixivié à partir du minerai à une température comprise entre environ la température ambiante et le point d'ébullition de la solution de lixiviation.

15. Procédé selon l'une quelconque des revendications 1 à 14, dans lequel l'acide régénéré est recyclé dans le procédé de lixiviation.
